# FASCICULE DE BREVET EUROPEEN

(11) **EP 2 372 171 B1**
(45) Date de publication et mention de la délivrance du brevet: **22.02.2017**
(21) Numéro de dépôt: 11158571.7
(22) Date de dépôt: 16.03.2011
(51) Int. Cl.: F16B 5/02, F16B 37/04

(54) **Ensemble de fixation**
Befestigungseinheit
Attachment assembly

(30) Priorité: 17.03.2010 FR 1051908
(43) Date de publication de la demande: 05.10.2011
(73) Titulaire: Clufix, 74300 Cluses (FR)
(72) Inventeur: Massebeuf, Eric, 74600, QUINTAL (FR)
(74) Mandataire: Cabinet Poncet

(56) Documents cités:
- EP-A1- 0 719 952
- AT-B- 390 529
- FR-A1- 2 554 522

## Description

La présente invention concerne un ensemble de fixation à dispositif de retenue pour la rétention d'une vis dans un trou traversant pratiqué dans un premier élément tel qu'une paroi par exemple, et concerne plus particulièrement un ensemble de fixation selon le préambule de la revendication 1 (AT 390 529 B). J

De plus en plus de normes et préconisations stipulent qu'une vis de fixation doit être maintenue captive sur l'élément qu'elle permet de fixer, afin d'éviter que la perte de la vis rende impossible le montage ou le remontage de l'élément.

Ceci est tout particulièrement le cas par exemple pour un premier élément tel qu'un capot de machine destiné à être fixé à un second élément tel qu'un bâti de machine afin de protéger l'utilisateur vis-à-vis des composants en mouvement à l'intérieur de la machine.

Généralement, le capot se présente sous la forme d'une paroi comprenant une pluralité de trous traversants dans lesquels viennent s'engager des vis destinées à se visser dans des trous filetés correspondants prévus sur le bâti de la machine. Afin de compenser les jeux dans l'alignement des trous traversants et des trous filetés, les trous traversants se présentent le plus souvent sous la forme de trous oblongs dans lesquels viennent s'insérer des vis de fixation.

Afin de rendre captives ces vis de fixation sur le premier élément préexistant, on peut utiliser un ensemble de fixation à dispositif de retenue tel que celui décrit dans le document WO 02/48557 A1. Un tel ensemble de fixation implique cependant obligatoirement une diminution du diamètre extérieur du tronçon fileté des vis qui peuvent être maintenues captives dans les trous oblongs. Il en résulte que les vis ainsi rendues captives ne sont pas capables d'aller se visser dans les trous filetés pré-existants du bâti de la machine. Le trou fileté du second élément (bâti de la machine) n'étant pas modifiable, on est alors obligé d'agrandir le trou oblong prévu dans le premier élément (capot) pour augmenter sa largeur. Mais les capots des machines ne sont pas toujours démontables et/ou manutentionnables pour être réusinés, de telle sorte qu'un réusinage du trou oblong est souvent impossible.

Le document FR 2 554 522 A1 décrit un dispositif d'assemblage permettant d'ajuster la position d'une vis de fixation selon deux directions distinctes dans une lumière s'étendant également selon deux directions distinctes.

Le document AT 390 529 B décrit un ensemble de fixation apte à tenir et bloquer en rotation un écrou disposé derrière la face cachée et inaccessible d'une paroi.

Un premier problème proposé par l'invention est de permettre la retenue d'une vis de diamètre extérieur fileté déterminé dans un trou oblong non modifiable d'un premier élément, la vis étant destinée à être vissée dans un trou fileté non modifiable d'un second élément, tout en conservant la capacité de réglage procurée par la forme oblongue du trou et en limitant les risques de perte accidentelle d'un ou plusieurs des éléments constitutifs de l'ensemble de fixation une fois installé.

Pour atteindre ces buts ainsi que d'autres, l'invention propose un ensemble de fixation comprenant un dispositif de retenue pour la rétention d'une vis dans un trou oblong traversant pratiqué dans un premier élément tel qu'une paroi, dans lequel :
- le dispositif de retenue comprend une première pièce et une seconde pièce, alésées de façon traversante selon une direction longitudinale pour recevoir la tige de la vis, et aptes à être assemblées l'une à l'autre en venant respectivement à proximité de la paroi, de part et d'autre de la paroi, selon des premiers et seconds moyens d'appui à première et seconde faces d'appui respectives,
- la première pièce et/ou la seconde pièce comporte un tronçon longitudinal à alésage interne muni de moyens de solidarisation aptes à coopérer avec l'autre pièce pour maintenir assemblées l'une à l'autre les première et seconde pièces,
- le tronçon longitudinal comporte deux méplats extérieurs diamétralement opposés permettant le passage du tronçon longitudinal dans le trou oblong ;
selon l'invention, l'ensemble de fixation comporte une vis de dimensions telles que lorsque la vis est engagée selon sa tige dans le dispositif de retenue formé par ses première et seconde pièces assemblées, sa tige s'oppose à l'échappement des moyens de solidarisation.

Les méplats permettent d'insérer la première et/ou la seconde pièce dans le trou oblong et de diminuer l'épaisseur radiale du tronçon longitudinal pour laisser une place suffisante à la vis selon la largeur du trou oblong afin que la vis présente un diamètre extérieur fileté suffisant pour se visser dans le trou fileté du second élément. Ni le trou oblong du premier élément ni le trou fileté du second élément ne sont modifiés. On peut ainsi facilement rendre conformes aux normes les premier et second éléments pré-existants.

L'assemblage des première et seconde pièces est irréversible tant que la vis est engagée dans le dispositif de retenue assemblé, ce qui limite efficacement les possibilités de démontage de l'ensemble de fixation pour éviter d'en perdre l'un des éléments constitutifs.

De préférence, on peut prévoir que les méplats extérieurs mettent en communication l'espace intérieur de l'alésage interne avec l'extérieur.

On laisse ainsi toute la place à la vis selon la largeur du trou oblong, ce qui s'avère particulièrement utile lorsque la vis présente un diamètre fileté extérieur tel qu'elle est engagée à faible jeu dans le trou oblong selon sa largeur.

Avantageusement, on peut prévoir que les moyens de solidarisation sont des moyens d'encliquetage.

Le montage et l'assemblage des première et seconde pièces dans le trou oblong peuvent ainsi se faire sans outil, de façon simple, rapide et manuelle. Il n'est ainsi pas nécessaire de procéder au démontage et à la manutention du premier élément, notamment lorsque celui-ci est un capot de machine lourd, encombrant, et difficile à manutentionner pour l'installer sous une presse afin d'effectuer l'assemblage des première et seconde pièces.

De préférence, les moyens d'encliquetage peuvent être orientés vers l'extérieur de façon à s'engager par déformation radiale vers l'extérieur et de façon à échapper par contraction radiale vers l'intérieur.

Selon un premier mode de réalisation de l'invention, on peut prévoir que :
- la seconde pièce est une douille qui comporte le tronçon longitudinal,
- la première pièce est une douille qui comprend un alésage distal à section transversale adaptée pour recevoir le tronçon longitudinal de la seconde pièce,
- les moyens d'encliquetage comprennent un épanouissement radial de l'extrémité libre du tronçon longitudinal, conformé pour être reçu et retenu dans une gorge annulaire intérieure prévue dans l'alésage distal de la première pièce.

Dans ce premier mode de réalisation, les moyens d'encliquetage sont disposés à l'intérieur de la première pièce et sont donc protégés afin de ne pas échapper accidentellement.

Dans une variante de ce premier mode de réalisation, on peut prévoir un encliquetage de la seconde pièce dans une gorge extérieure de la première pièce.

Selon un second mode de réalisation de l'invention, on peut prévoir que :
- la première pièce est une douille qui comporte le tronçon longitudinal,
- la seconde pièce est une rondelle plate à alésage central,
- les moyens d'encliquetage comprennent un épanouissement radial de l'extrémité libre du tronçon longitudinal, conformé pour être reçu par déformation radiale élastique dans l'alésage central de la seconde pièce et y être retenu après avoir traversé l'alésage central de la seconde pièce.

La seconde pièce de ce mode de réalisation est particulièrement simple et peu onéreuse à fabriquer.

De préférence, on peut prévoir que le tronçon longitudinal comporte une ou plusieurs fentes longitudinales dans sa paroi sur une partie au moins de sa longueur.

La ou les fentes longitudinales procurent au tronçon longitudinal une élasticité radiale satisfaisante au voisinage de son extrémité libre pour permettre un assemblage manuel aisé des première et seconde pièces.

Avantageusement, on peut prévoir que les moyens d'encliquetage sont irréversibles, et comportent de préférence :
- dans la gorge annulaire intérieure ou sur la rondelle plate, une première facette de butée sensiblement perpendiculaire à la direction longitudinale,
- sur l'épanouissement radial, une seconde facette de butée sensiblement perpendiculaire à la direction longitudinale et orientée de façon à venir en appui contre la première facette de butée.

Ainsi, bien que l'assemblage des première et seconde pièces soit aisé au point de pouvoir être réalisé manuellement et sans outil, le dispositif de retenue présente une excellente tenue contre toute tentative de séparation de ces première et seconde pièces.

En alternative, on peut prévoir que les moyens d'encliquetage sont réversibles. La réversibilité des moyens d'encliquetage permet de séparer les première et seconde pièces sans les endommager après qu'elles aient été assemblées une première fois. Ceci peut s'avérer particulièrement utile en cas d'erreur de l'utilisateur. En outre, on peut ainsi vendre des dispositifs de retenue à première et seconde pièces assemblées l'une à l'autre, ce qui permet de garantir que le nombre de premières pièces dans un lot est égal au nombre de secondes pièces. On peut ainsi n'avoir qu'une seule référence à gérer dans les stocks.

De préférence, l'ensemble de fixation peut comprendre des moyens pour rendre la vis captive du dispositif de retenue et donc imperdable.

A cet effet, on peut prévoir que :
- la première pièce comporte une partie déformable configurée de façon à pouvoir être déformée par des moyens de déformation prévus sur la vis,
- après déformation, la partie déformable s'oppose à la séparation de la vis et de la première pièce.

Les moyens de déformation de la vis permettent de déformer la partie déformable de la première pièce pour rendre, de façon simple et efficace, la première vis inséparable de la première pièce. Les première et seconde pièces étant elles-mêmes inséparables en présence de la vis, on dispose ainsi d'un ensemble de fixation parfaitement indémontable comprenant une vis imperdable.

Selon une première variante, on peut prévoir que :
- la vis comporte un tronçon distal fileté prolongé, en direction de la tête de vis, par un tronçon proximal lisse de diamètre inférieur au diamètre extérieur du tronçon distal fileté, le tronçon proximal lisse étant lui-même relié à la tête de vis par un tronçon de liaison constituant les moyens de déformation,
- la première pièce comporte un alésage proximal à filetage intérieur adapté pour recevoir par vissage la vis et constituant la partie déformable,
- le tronçon de liaison présente un diamètre extérieur et une longueur lui permettant d'être engagé dans l'alésage proximal de la première pièce en déformant le filetage intérieur.

Avantageusement, on peut prévoir que le tronçon de liaison s'étend selon une longueur telle que, lorsqu'il est engagé dans l'alésage proximal de la première pièce, il ne déforme qu'une partie seulement du filetage intérieur.

Il est ainsi possible de relever la vis en la vissant dans la partie de filetage non déformée par le tronçon de liaison, sans pour autant que la vis puisse être séparée du dispositif de retenue. On peut ainsi facilement repérer si la vis est encore engagée ou non dans son trou fileté de vissage dans le second élément tel qu'un bâti de machine. En outre, la vis est ainsi maintenue de façon fiable hors du trou fileté du second élément et ne risque pas de s'y réengager partiellement de façon fortuite.

En alternative, on peut préférer une seconde variante dans laquelle on peut prévoir que :
- la vis comporte un tronçon distal fileté prolongé, en direction de la tête de vis, par un tronçon proximal lisse de diamètre inférieur au diamètre extérieur du tronçon distal fileté,
- la première pièce comporte un alésage proximal adapté pour recevoir la vis, pratiqué dans une couronne proximale disposée en saillie sur la première pièce et constituant la partie déformable,
- la tête de vis, constituant les moyens de déformation, est conformée pour déformer la couronne proximale de telle sorte qu'après déformation l'alésage proximal présente un diamètre inférieur au diamètre du tronçon distal fileté.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un premier mode de réalisation de dispositif de retenue selon l'invention ;
- la figure 2 est une vue de dessus de l'une des pièces constituant le dispositif de retenue de la figure 1 ;
- les figures 3 à 7 sont des vues en coupe partielle illustrant l'utilisation et le fonctionnement d'un ensemble de fixation selon l'invention comprenant le dispositif de retenue de la figure 1 ; et
- la figure 8 est une vue en coupe partielle illustrant un ensemble de fixation comprenant un dispositif de retenue selon un second mode de réalisation de l'invention ; et
- les figures 9 et 10 sont des vues de détail en coupe partielle d'une variante des premier et second modes de réalisation.

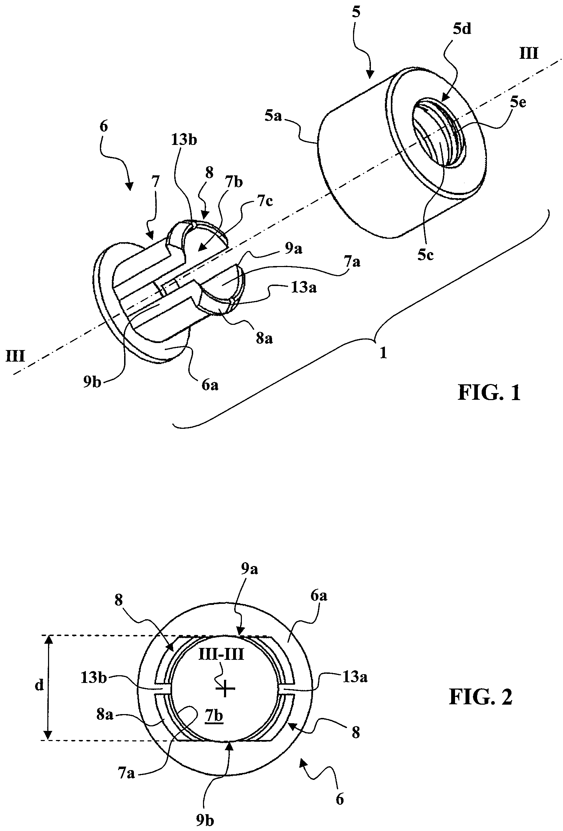

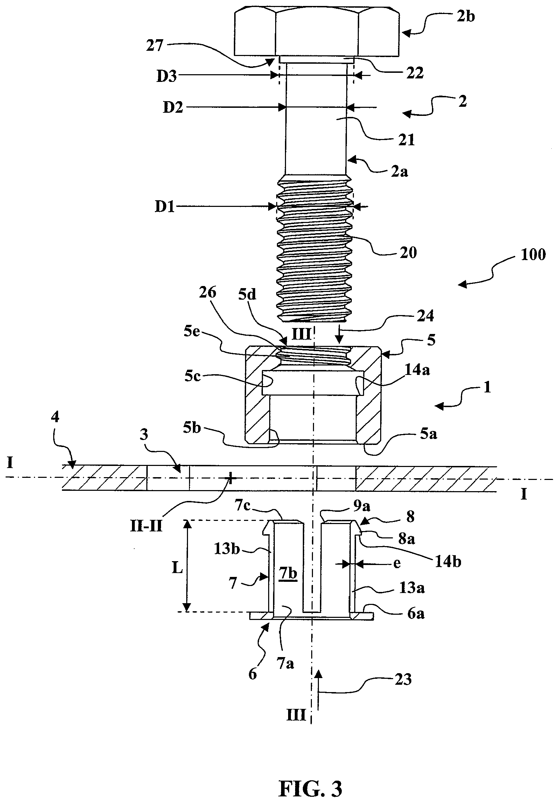

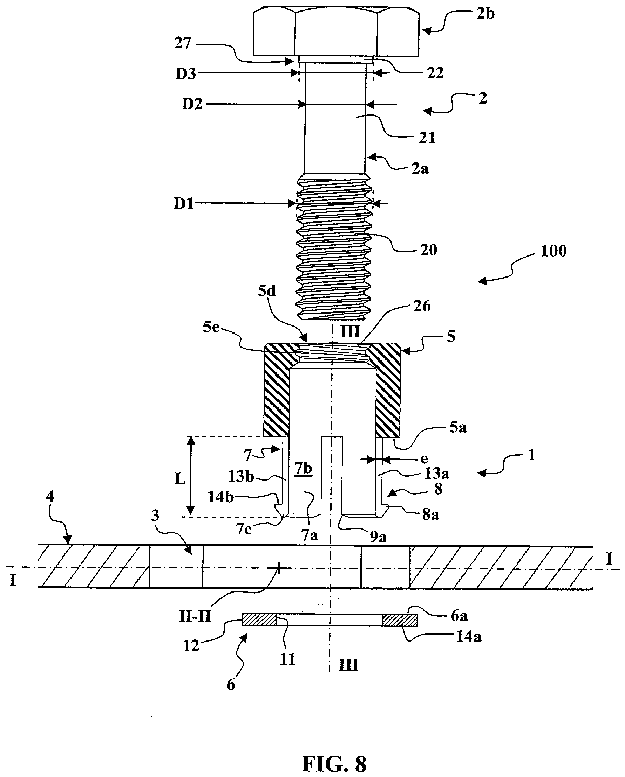

Sur les figures 1 à 3 est illustré un premier mode de réalisation de dispositif de retenue selon l'invention, tandis qu'un second mode de réalisation de dispositif de retenue selon l'invention est illustré sur la figure 8. Ces dispositifs de retenue 1 sont destinés à retenir une vis 2 dans un trou oblong 3 traversant pratiqué dans un premier élément qui se présente sous la forme d'une paroi 4. On voit plus particulièrement sur les figures 3 et 8 que le trou oblong 3 s'étend en longueur selon une direction I-I et s'étend en largeur selon une direction II-II perpendiculaire à la direction I-I.

Dans chacun des modes de réalisation, le dispositif de retenue 1 comprend une première pièce 5 et une seconde pièce 6, alésées de façon traversante selon une direction longitudinale III-III pour recevoir la tige 2a de la vis 2. Les première et seconde pièces 5 et 6 sont aptes à être assemblées l'une à l'autre en venant respectivement à proximité de la paroi 4, de part et d'autre de la paroi 4, selon des premiers et seconds moyens d'appui à première et seconde faces d'appui 5a et 6a respectives.

Dans le mode de réalisation illustré sur la figure 3, la seconde pièce 6 comporte un tronçon longitudinal 7 à alésage interne 7a muni de moyens de solidarisation 8 aptes à coopérer avec la première pièce 5 pour maintenir assemblées l'une à l'autre les première et seconde pièces 5 et 6.

Dans le mode de réalisation illustré sur la figure 8, c'est la première pièce 5 qui comporte le tronçon longitudinal 7 à alésage interne 7a muni de moyens de solidarisation 8 aptes à coopérer avec la seconde pièce 6 pour maintenir assemblées l'une à l'autre les première et seconde pièces 5 et 6.

Dans un autre mode de réalisation (non représenté sur les figures) la première pièce 5 et la seconde pièce 6 comportent chacune un tronçon longitudinal à alésage interne muni de moyens de solidarisation aptes à coopérer avec l'autre pièce 5 ou 6 pour maintenir assemblées l'une à l'autre les première et seconde pièces 5 et 6.

On voit plus particulièrement sur les figures 1 et 2 que le tronçon longitudinal 7 comporte deux méplats 9a et 9b extérieurs diamétralement opposés permettant le passage du tronçon longitudinal 7 dans le trou oblong 3.

Pour ce faire, en pratique, les méplats 9a et 9b sont écartés l'un de l'autre d'une distance d inférieure ou égale à la largeur selon laquelle le trou oblong 3 s'étend selon la direction II-II.

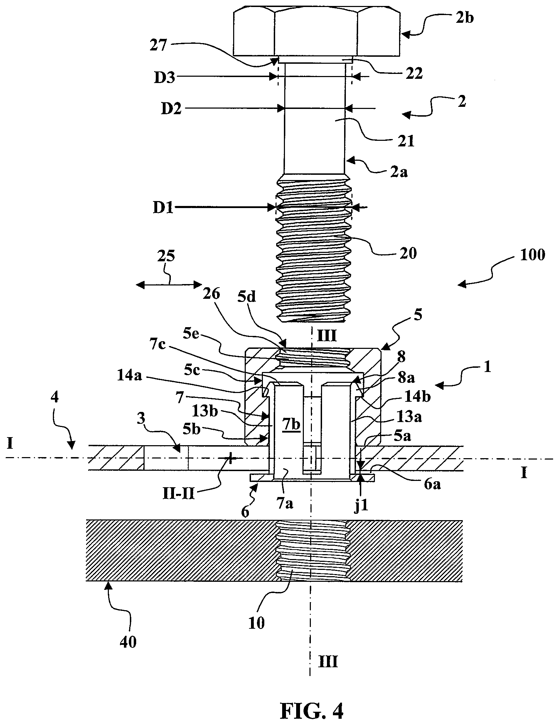

On comprend que les méplats 9a et 9b permettent de diminuer l'épaisseur radiale e du tronçon longitudinal 7 pour laisser place à la vis 2 selon la direction II-II du trou oblong 3 afin qu'elle conserve un diamètre extérieur fileté D1 capable de se visser dans le trou fileté 10 d'un second élément qui peut par exemple être le bâti d'une machine 40 (voir figure 4).

On comprend également que le dispositif de retenue 1 une fois assemblé peut, grâce aux méplats 9a et 9b, être déplacé dans le trou oblong 3 selon la direction I-I pour permettre la mise en correspondance de la vis 2 et du trou fileté 10.

Dans les modes de réalisation illustrés sur les figures 1 à 8, les méplats 9a et 9b extérieurs mettent en communication l'espace intérieur 7b de l'alésage interne 7a avec l'extérieur. Le tronçon longitudinal 7 laisse ainsi libre la totalité de la largeur du trou oblong 3 selon la direction II-II pour laisser place au tronçon fileté de la vis 2 afin de garantir que celle-ci conserve un diamètre extérieur fileté D1 compatible avec le trou fileté 10 même lorsque le jeu radial selon la direction II-II entre le trou oblong 3 et la vis 2 qui y était précédemment installée est faible.

Dans les modes de réalisation illustrés sur les figures 1 à 8, les moyens de solidarisation 8 sont des moyens d'encliquetage.

En l'espèce, dans le premier mode de réalisation illustré sur les figures 1 à 7, la seconde pièce 6 est une douille qui comporte le tronçon longitudinal 7. La première pièce 5 est également une douille qui comprend un alésage distal 5b à section transversale adaptée pour recevoir le tronçon longitudinal 7 de la seconde pièce 6. Les moyens d'encliquetage comprennent un épanouissement radial 8a de l'extrémité libre 7c du tronçon longitudinal 7. L'épanouissement radial 8a est conformé pour être reçu et retenu dans une gorge annulaire intérieure 5c prévue dans l'alésage distal 5b de la première pièce 5.

Dans une variante du premier mode de réalisation non illustrée sur les figures, l'épanouissement radial 8a de l'extrémité libre 7c du tronçon longitudinal 7 peut s'étendre vers l'intérieur de l'alésage interne 7a et peut être conformé pour être reçu et retenu dans une gorge annulaire extérieure 5c prévue dans la surface extérieure de la première pièce 5.

Dans le second mode de réalisation illustré sur la figure 8, on constate en revanche que la première pièce 5 est une douille qui comporte le tronçon longitudinal 7 tandis que la seconde pièce 6 est une simple rondelle plate à alésage central 11. Les moyens d'encliquetage comprennent un épanouissement radial 8a de l'extrémité libre 7c du tronçon longitudinal 7, l'épanouissement radial 8a étant conformé pour être reçu par déformation radiale élastique dans l'alésage central 11 de la seconde pièce 6 et y être retenu après avoir traversé l'alésage central 11.

Dans une variante du second mode de réalisation non illustrée sur les figures, l'épanouissement radial 8a peut également s'étendre radialement vers l'intérieur de l'alésage interne 7a et le tronçon longitudinal 7 peut être dimensionné de façon à venir s'encliqueter sur la surface extérieure 12 de la seconde pièce 6.

Dans les deux modes de réalisation illustrés sur les figures 1 à 8, le tronçon longitudinal 7 comporte deux fentes longitudinales 13a et 13b dans sa paroi sur toute sa longueur L. Les fentes longitudinales 13a et 13b permettent de faciliter la déformation radiale par contraction de son extrémité libre 7c lors de sa pénétration dans l'alésage distal 5b ou dans l'alésage central 11.

Les moyens d'encliquetage sont orientés vers l'extérieur (épanouissement radial 8a) de façon à s'engager par déformation radiale vers l'extérieur et de façon à échapper par contraction radiale vers l'intérieur.

Afin d'éviter que le dispositif de retenue 1 puisse être démonté une fois celui-ci assemblé dans un trou oblong 3, les moyens d'encliquetage peuvent être irréversibles. Pour ce faire, les moyens d'encliquetage comportent de préférence :
- dans la gorge annulaire intérieure 5c ou sur la rondelle plate, une première facette de butée 14a sensiblement perpendiculaire à la direction longitudinale III-III,
- sur l'épanouissement radial 8a, une seconde facette de butée 14b sensiblement perpendiculaire à la direction longitudinale III-III et orientée de façon à venir en appui contre la première facette de butée 14a.

On comprend qu'il est cependant possible de donner des orientations légèrement différentes (par exemple obliques par rapport à la direction longitudinale III-III) à la première et/ou la seconde facettes de butée 14a et 14b afin qu'elles coopèrent pour empêcher que les première et seconde pièces 5 et 6 ne puissent être séparées l'une à l'écart de l'autre selon la direction longitudinale III-III.

En alternative, il est également possible de prévoir des moyens d'encliquetage réversibles. Pour ce faire, on peut orienter (par exemple de façon oblique par rapport à la direction longitudinale III-III) et/ou configurer la première et/ou la seconde facettes de butée 14a et 14b de façon que lorsque les première et seconde pièces 5 et 6 sont soumises à un effort de séparation l'une à l'écart de l'autre selon la direction longitudinale III-III, la force appliquée à leur séparation induise une force radiale tendant à faire échapper les moyens d'encliquetage. Dans ce cas, les facettes de butée 14a et/ou 14b peuvent être planes ou arrondies.

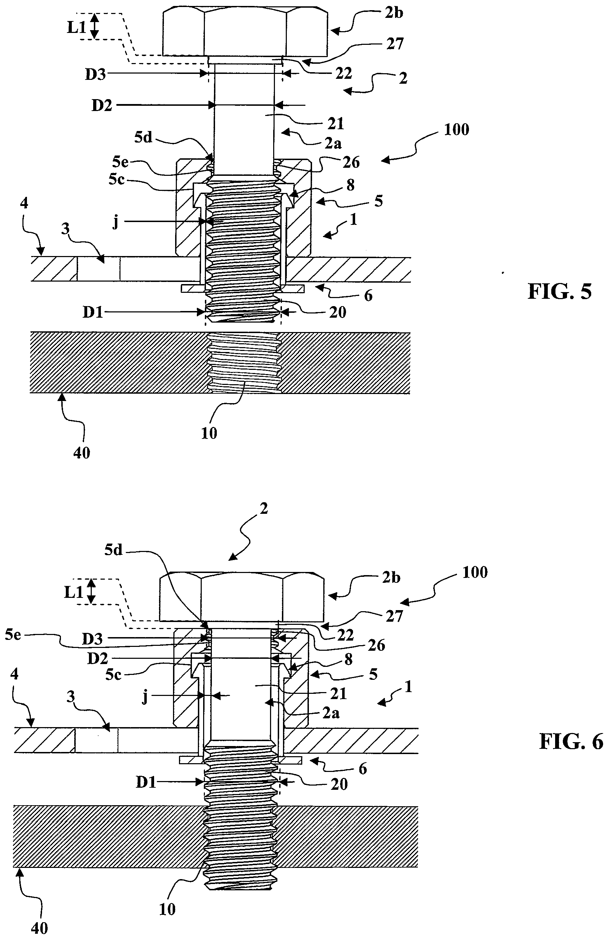

On voit plus particulièrement sur les figures 5 et 6 que le dispositif de retenue 1 selon l'invention est associé à une vis 2 pour former un ensemble de fixation 100. La vis 2 a des dimensions telles que lorsqu'elle est engagée selon sa tige 2a dans le dispositif de retenue 1 formé par ses première et seconde pièces 5 et 6 assemblées, sa tige 2a s'oppose à l'échappement des moyens de solidarisation 8 (qui sont ici en l'espèce des moyens d'encliquetage).

Pour ce faire, la tige 2a de la vis 2 comporte un ou plusieurs diamètres extérieurs (ici D1 et D2) tels que lorsque la tige 2a est engagée dans l'alésage interne 7a du tronçon longitudinal 7, il demeure un jeu j (figures 5 et 6) suffisamment petit pour que tout échappement des moyens d'encliquetage (par déplacement radial vers l'intérieur de l'épanouissement radial 8a de l'extrémité libre 7c du tronçon longitudinal 7) soit empêché.

Afin de rendre inséparable la vis 2 de la première pièce 5, on prévoit que :
- la première pièce 5 comporte une partie déformable 26 configurée de façon à pouvoir être déformée par des moyens de déformation 27 prévus sur la vis 2 ;
- après déformation, la partie déformable 26 s'oppose à la séparation de la vis 2 et de la première pièce 5.

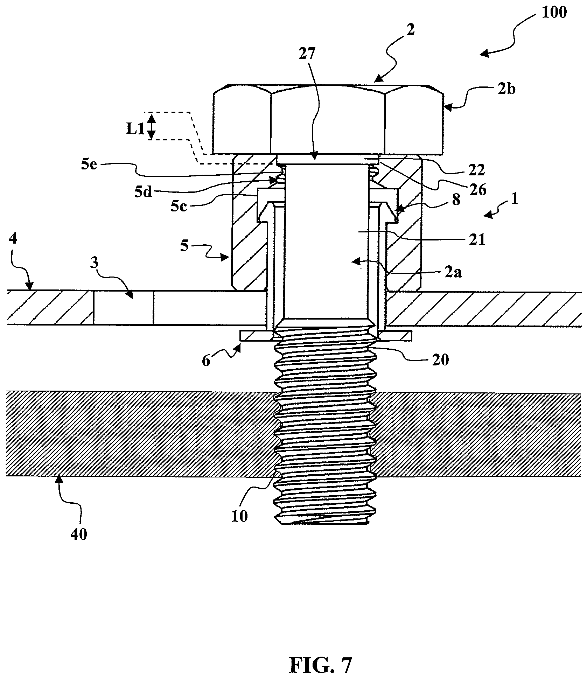

On voit plus particulièrement dans une première variante illustrée sur les figures 3 à 8 que la vis 2 comporte un tronçon distal 20 fileté prolongé, en direction de la tête de vis 2b, par un tronçon proximal 21 lisse de diamètre D2 inférieur au diamètre extérieur fileté D1 du tronçon distal 20 fileté, le tronçon proximal 21 lisse étant lui-même relié à la tête de vis 2b par un tronçon de liaison 22 constituant les moyens de déformation 27. La première pièce 5 comporte un alésage proximal 5d à filetage intérieur 5e adapté pour recevoir par vissage la vis 2 et constituant la partie déformable 26. Le tronçon de liaison 22 présente un diamètre extérieur D3 et une longueur L1 lui permettant d'être engagé dans l'alésage proximal 5d de la première pièce 5 en déformant le filetage intérieur 5e (figure 7).

En pratique, le diamètre extérieur D3 est supérieur au diamètre intérieur du filetage intérieur 5e et inférieur au diamètre à fond de filet du filetage intérieur 5e. D3 peut par exemple être sensiblement égal à D1.

Sur la figure 7, on constate que le tronçon de liaison 22 s'étend selon une longueur L1 telle que, lorsqu'il est engagé dans l'alésage proximal 5d de la première pièce 5, il ne déforme qu'une partie seulement du filetage intérieur 5e.

L'utilisation et le fonctionnement du dispositif de retenue 1 et de l'ensemble de fixation 100 selon l'invention sont décrits ci-après et plus particulièrement en relation avec les figures 3 à 7.

Lors d'une première étape illustrée sur la figure 3, les première et seconde pièces 5 et 6 sont rapprochées l'une vers l'autre selon la direction longitudinale III-III par un mouvement illustré par les flèches 23 et 24. Lors de ce mouvement de rapprochement, le tronçon longitudinal 7 est engagé dans le trou oblong 3 pour venir s'engager dans la gorge annulaire intérieure 5c de la première pièce 5, la première pièce 5 reposant en appui selon la première face d'appui 5a contre la paroi 4. En fin de rapprochement des première et seconde pièces 5 et 6, l'épanouissement radial 8a vient s'encliqueter dans la gorge annulaire intérieure 5c afin d'y être retenu. Le dispositif de retenue 1 est alors assemblé dans le trou oblong 3 comme illustré sur la figure 4.

On observe plus particulièrement sur la figure 4 qu'il demeure un faible jeu j1 entre la paroi 4 et la seconde face d'appui 6a lorsque l'épanouissement radial 8a est encliqueté dans la gorge annulaire intérieure 5c. Le jeu j1 permet de déplacer plus aisément le dispositif de retenue 1 selon la direction I-I d'allongement du trou oblong 3 par un mouvement illustré par la double flèche 25. La vis 2 peut ainsi être mise en correspondance avec le trou fileté 10.

Une fois le dispositif de retenue 1 assemblé, on peut former l'ensemble de fixation 100 en engageant la vis 2 dans l'alésage proximal 5d de la première pièce 5 (figure 5).

Une fois que l'opérateur a mis en correspondance la vis 2 avec le trou fileté 10, la vis 2 peut être vissée dans le trou fileté 10 prévu dans le bâti de machine 40 (figure 6).

La pénétration de la vis 2 se fait aisément jusqu'à ce que le tronçon de liaison 22 vienne au contact du premier filet du filetage intérieur 5e (figure 6). En poursuivant le vissage de la vis 2 dans le trou fileté 10, le tronçon de liaison 22 est forcé en pénétration dans l'alésage proximal 5d de la première pièce 5 et en déforme le ou les premiers filets (figure 7). La vis 2 ne peut alors plus être retirée de l'alésage proximal 5d et reste donc captive dans la première pièce 5 tout en pouvant être vissée et dévissée du trou fileté 10. La première pièce 5 et la seconde pièce 6 ne pouvant être séparées en présence de la tige 2a de la vis 2, on dispose ainsi d'un ensemble de fixation 100 à vis 2 captive et parfaitement imperdable.

Lorsque l'opérateur souhaite séparer le premier élément (paroi 4) du second élément (bâti de machine 40), il dévisse la vis 2 jusqu'à extraire totalement le tronçon distal 20 fileté hors du trou fileté 10 (figure 5). Afin de s'assurer que l'extrémité libre du tronçon distal 20 fileté de la vis 2 ne se réengage pas accidentellement dans le trou fileté 10, le tronçon distal 20 fileté peut être vissé dans les filets du filetage intérieur 5e qui n'ont pas été précédemment endommagés et déformés par le tronçon de liaison 22. Visuellement, l'opérateur peut ainsi vite contrôler si la vis 2 est ou non correctement retirée du trou fileté 10.

L'utilisation et le fonctionnement de l'ensemble de fixation 100 comprenant le dispositif de retenue 1 selon le second mode de réalisation de l'invention illustré sur la figure 8 sont parfaitement analogues et comprennent les mêmes étapes.

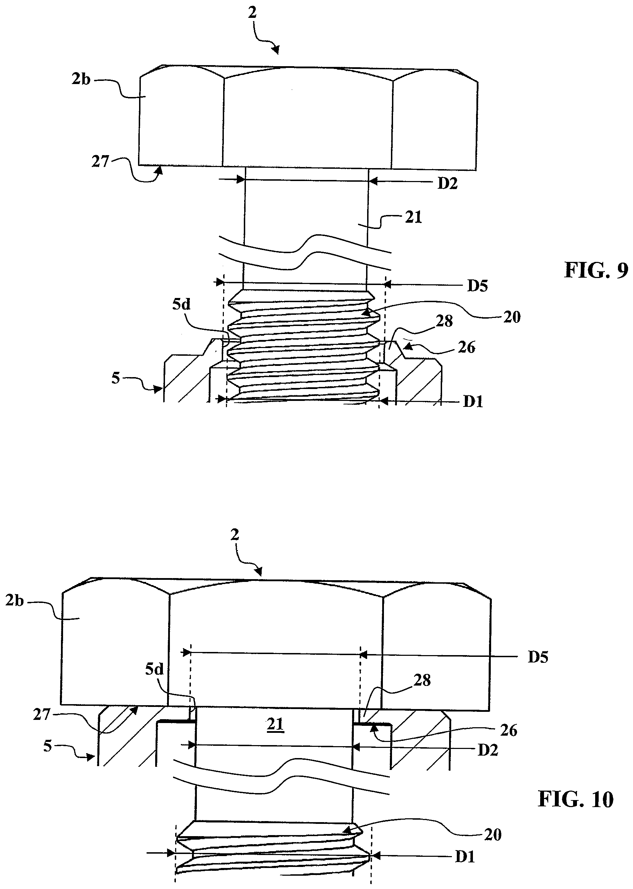

Une seconde variante, applicable au premier mode de réalisation et au second mode de réalisation, permet de rendre inséparable la vis 2 de la première pièce 5 et est illustrée sur les figures 9 et 10 qui sont des vues de détail.

Dans cette variante, on voit que :
- la vis 2 comporte un tronçon distal 20 fileté prolongé, en direction de la tête de vis 2b, par un tronçon proximal 21 lisse de diamètre D2 inférieur au diamètre extérieur D1 du tronçon distal 20 fileté,
- la première pièce 5 comporte un alésage proximal 5d adapté pour recevoir la vis 2, pratiqué dans une couronne proximale 28 disposée en saillie sur la première pièce 5 et constituant la partie déformable 26,
- la tête de vis 2b, constituant les moyens de déformation 27, est conformée pour déformer la couronne proximale 28 de telle sorte qu'après déformation l'alésage proximal 5d présente un diamètre D5 inférieur au diamètre D1 du tronçon distal 20 fileté.

En pratique, après assemblage des première et seconde pièces 5 et 6, la vis 2 est engagée dans l'alésage proximal 5d et vissée dans le trou fileté 10 (non visible) jusqu'à ce que la tête de vis 2b vienne au contact de la couronne proximale 28.

En poursuivant le vissage de la vis 2, la tête de vis 2b déforme la couronne proximale 28. La couronne proximale 28 est aplatie et, grâce à sa configuration, sa matière constitutive flue radialement vers l'intérieur et réduit le diamètre D5 de l'alésage proximal 5d.

En fin de déformation (figure 10), l'alésage proximal 5d présente un diamètre D5 inférieur au diamètre D1. La séparation de la vis 2 et de la première pièce 5 est ainsi empêchée.

On comprend que le dispositif de retenue 1 peut également être utilisé en première monte pour être assemblé dans un trou circulaire ou oblong dont les dimensions sont prévues dès l'origine pour loger radialement simultanément le ou les tronçons longitudinaux 7 et une vis 2 à tronçon distal fileté capable de se visser dans un trou fileté placé en correspondance. Dans un tel cas, le dispositif de retenue 1 peut être dépourvu des méplats 9a et 9b et peut en outre comporter l'une ou plusieurs des caractéristiques précédemment énoncées afin d'obtenir les effets et avantages correspondants qui ont été explicités.

Un ensemble de fixation 100 peut également être formé avec un tel dispositif de retenue 1 pour première monte dépourvu de méplats 9a et 9b, et cet ensemble de fixation peut en outre comporter l'une ou plusieurs des caractéristiques précédemment énoncées afin d'obtenir les effets et avantages correspondants qui ont été explicités.

On observe que, dans chacun des ensembles de fixation 100 des figures 3 et 8 d'une part et 9 et 10 d'autre part, les moyens de déformation 27 et la partie déformable 26 sont conformés de telle sorte que les moyens de déformation 27 déforment la partie déformable 26 par le seul vissage de la vis 2 dans le trou fileté 10 du bâti de machine 40 (figure 6). La vis 2 est ainsi rendue captive sans outil spécifique autre que des moyens de vissage conventionnels et sans étape spécifique de sertissage distincte de l'étape de vissage. Il en résulte une facilité d'installation et un gain de temps appréciables.

La présente invention n'est pas limitée aux modes de réalisation qui ont été explicitement décrits, mais elle en inclut les diverses variantes et généralisations contenues dans le domaine des revendications ci-après.

## Revendications

1. Ensemble de fixation (100) comprenant un dispositif de retenue (1) pour la rétention d'une vis (2) dans un trou oblong (3) traversant pratiqué dans un premier élément tel qu'une paroi (4), dans lequel :
- le dispositif de retenue (1) comprend une première pièce (5) et une seconde pièce (6), alésées de façon traversante selon une direction longitudinale (III-III) pour recevoir la tige (2a) de la vis (2), et aptes à être assemblées l'une à l'autre en venant respectivement à proximité de la paroi (4), de part et d'autre de la paroi (4), selon des premiers et seconds moyens d'appui à première (5a) et seconde (6a) faces d'appui respectives,
- la première pièce (5) et/ou la seconde pièce (6) comporte un tronçon longitudinal (7) à alésage interne (7a) muni de moyens de solidarisation (8) aptes à coopérer avec l'autre pièce (5, 6) pour maintenir assemblées l'une à l'autre les première (5) et seconde (6) pièces,
- le tronçon longitudinal (7) comporte deux méplats (9a, 9b) extérieurs diamétralement opposés permettant le passage du tronçon longitudinal (7) dans le trou oblong (3),
**caractérisé en ce qu'**il comporte une vis (2) de dimensions telles que lorsque la vis (2) est engagée selon sa tige (2a) dans le dispositif de retenue (1) formé par ses première (5) et seconde (6) pièces assemblées, sa tige (2a) s'oppose à l'échappement des moyens de solidarisation (8).

2. Ensemble de fixation (100) selon la revendication 1, **caractérisé en ce que** les méplats (9a, 9b) extérieurs mettent en communication l'espace intérieur (7b) de l'alésage interne (7a) avec l'extérieur.

3. Ensemble de fixation (100) selon l'une des revendications 1 ou 2, **caractérisé en ce que** les moyens de solidarisation (8) sont des moyens d'encliquetage.

4. Ensemble de fixation (100) selon la revendication 3, **caractérisé en ce que** les moyens d'encliquetage sont orientés vers l'extérieur de façon à s'engager par déformation radiale vers l'extérieur et de façon à échapper par contraction radiale vers l'intérieur.

5. Ensemble de fixation (100) selon l'une des revendications 3 ou 4, **caractérisé en ce que** :
- la seconde pièce (6) est une douille qui comporte le tronçon longitudinal (7),
- la première pièce (5) est une douille qui comprend un alésage distal (5b) à section transversale adaptée pour recevoir le tronçon longitudinal (7) de la seconde pièce (6),
- les moyens d'encliquetage comprennent un épanouissement radial (8a) de l'extrémité libre (7c) du tronçon longitudinal (7), conformé pour être reçu et retenu dans une gorge annulaire intérieure (5c) prévue dans l'alésage distal (5b) de la première pièce (5).

6. Ensemble de fixation (100) selon l'une des revendications 3 ou 4, **caractérisé en ce que** :
- la première pièce (5) est une douille qui comporte le tronçon longitudinal (7),
- la seconde pièce (6) est une rondelle plate à alésage central (11),
- les moyens d'encliquetage comprennent un épanouissement radial (8a) de l'extrémité libre (7c) du tronçon longitudinal (7), conformé pour être reçu par déformation radiale élastique dans l'alésage central (11) de la seconde pièce (6) et y être retenu après avoir traversé l'alésage central (11) de la seconde pièce (6).

7. Ensemble de fixation (100) selon la revendication 6, **caractérisé en ce que** le tronçon longitudinal (7) comporte une ou plusieurs fentes longitudinales (13a, 13b) dans sa paroi sur une partie au moins de sa longueur (L).

8. Ensemble de fixation (100) selon l'une quelconque des revendications 3 à 7, **caractérisé en ce que** les moyens d'encliquetage sont irréversibles, comportant de préférence :
- dans la gorge annulaire intérieure (5c) ou sur la rondelle plate, une première facette de butée (14a) sensiblement perpendiculaire à la direction longitudinale (III-III),
- sur l'épanouissement radial (8a), une seconde facette de butée (14b) sensiblement perpendiculaire à la direction longitudinale (III-III) et orientée de façon à venir en appui contre la première facette de butée (14a).

9. Ensemble de fixation (100) selon l'une quelconque des revendications 3 à 7, **caractérisé en ce que** les moyens d'encliquetage sont réversibles.

10. Ensemble de fixation (100) selon l'une quelconque des revendications 1 à 9, **caractérisé en ce que** :
- la première pièce (5) comporte une partie déformable (26) configurée de façon à pouvoir être déformée par des moyens de déformation (27) prévus sur la vis (2),
- après déformation, la partie déformable (26) s'oppose à la séparation de la vis (2) et de la première pièce (5).

11. Ensemble de fixation (100) selon la revendication 10, **caractérisé en ce que** :
- la vis (2) comporte un tronçon distal (20) fileté prolongé, en direction de la tête de vis (2b), par un tronçon proximal (21) lisse de diamètre (D2) inférieur au diamètre extérieur (D1) du tronçon distal (20) fileté, le tronçon proximal (21) lisse étant lui-même relié à la tête de vis (2b) par un tronçon de liaison (22) constituant les moyens de déformation (27),
- la première pièce (5) comporte un alésage proximal (5d) à filetage intérieur (5e) adapté pour recevoir par vissage la vis (2) et constituant la partie déformable (26),
- le tronçon de liaison (22) présente un diamètre extérieur (D3) et une longueur (L1) lui permettant d'être engagé dans l'alésage proximal (5d) de la première pièce (5) en déformant le filetage intérieur (5e).

12. Ensemble de fixation (100) selon la revendication 11, **caractérisé en ce que** le tronçon de liaison (22) s'étend selon une longueur (L1) telle que, lorsqu'il est engagé dans l'alésage proximal (5d) de la première pièce (5), il ne déforme qu'une partie seulement du filetage intérieur (5e).

13. Ensemble de fixation (100) selon la revendication 11, **caractérisé en ce que** :
- la vis (2) comporte un tronçon distal (20) fileté prolongé, en direction de la tête de vis (2b), par un tronçon proximal (21) lisse de diamètre (D2) inférieur au diamètre extérieur (D1) du tronçon distal (20) fileté,
- la première pièce (5) comporte un alésage proximal (5d) adapté pour recevoir la vis (2), pratiqué dans une couronne proximale (28) disposée en saillie sur la première pièce (5) et constituant la partie déformable (26),
- la tête de vis (2b), constituant les moyens de déformation (27), est conformée pour déformer la couronne proximale (28) de telle sorte qu'après déformation l'alésage proximal (5d) présente un diamètre (D5) inférieur au diamètre (D1) du tronçon distal (20) fileté.

## Patentansprüche

1. Befestigungseinheit (100) mit einer Haltevorrichtung (1) zum Sichern einer Schraube (2) in einem durchgehenden Langloch (3), das in ein erstes Bauteil mit etwa der Form einer Wand (4) eingearbeitet ist, wobei :
- die Haltevorrichtung (1) ein erstes Element (5) und ein zweites Element (6) aufweist, die in einer Längsrichtung (III-III) eine durchgehende Bohrung haben, um den Schaft (2a) der Schraube (2) aufzunehmen, und die so zusammensetzbar sind, dass sie sich mit ersten (5a) respektive zweiten (6a) Anlageseiten an den beiden Seiten der Wand (4) abstützen,
- das erste Element (5) und/oder das zweite Element (6) einen Längsabschnitt (7) mit Innenbohrung (7a) haben, der mit Kopplungsmitteln (8) versehen ist, die mit dem jeweils anderen Element (5, 6) zusammenwirken, um das erste Element (5) und das zweite Element (6) zusammenzuhalten,
- der Längsabschnitt (7) zwei äußere, diametral gegenüberliegende Abflachungen (9a, 9b) hat, die den Einschub des Längsabschnittes (7) in das Langloch (3) ermöglichen,
**dadurch gekennzeichnet, dass** die Schraube (2) so dimensioniert ist, dass ihr Schaft (2a) bei Eingriff in die aus dem ersten (5) und dem zweiten Element (6) bestehende Haltevorrichtung (1) einem Lösen der Kopplungsmittel (8) entgegenwirkt.

2. Befestigungseinheit (100) nach Anspruch 1, **dadurch gekennzeichnet, dass** die äußeren Abflachungen (9a, 9b) den Innenraum (7b) der Innenbohrung (7a) mit dem Außenraum in Verbindung bringen.

3. Befestigungseinheit (100) nach Anspruch 1 oder 2, **dadurch gekennzeichnet, dass** die Kopplungsmittel (8) aus Rastorganen bestehen.

4. Befestigungseinheit (100) nach Anspruch 3, **dadurch gekennzeichnet, dass** die Rastorgane so nach außen gerichtet sind, dass sie bei einer Radialverformung nach außen in die Eingriffsstellung kommen und bei einer radialen Kontraktion nach innen freikommen.

5. Befestigungseinheit (100) nach Anspruch 3 oder 4, **dadurch gekennzeichnet, dass**:
- das zweite Element (6) aus einer Hülse besteht, die den Längsabschnitt (7) aufweist,
- das erste Element (5) eine Hülse ist, die eine distale Bohrung (5b) mit einem Querschnitt aufweist, der zur Aufnahme des Längsabschnittes (7) des zweiten Elementes (6) ausgebildet ist,
- die Rastorgane durch radiale Aufspreizfähigkeit (8a) des freien Endes (7c) des Längsabschnittes (7) in eine Innenringnut (5c) in der distalen Bohrung (5b) des ersten Elementes (5) eingreifen und in dieser gehalten werden.

6. Befestigungseinheit (100) nach Anspruch 3 oder 4, **dadurch gekennzeichnet, dass**:
- das erste Element (5) aus einer Hülse besteht, die den Längsabschnitt (7) aufweist,
- das zweite Element (6) aus einer flachen Ringscheibe mit Mittelbohrung (11) besteht,
- die Rastorgane durch radiale Aufspreizfähigkeit (8a) des freien Endes (7c) des Längsabschnittes (7) und elastische Radialverformung in die Mittelbohrung (11) des zweiten Elementes (6) eingreifen und dort gehalten werden, nachdem sie die Mittelbohrung (11) des zweiten Elementes (6) durchdrungen haben.

7. Befestigungseinheit (100) nach Anspruch 6, **dadurch gekennzeichnet, dass** der Längsabschnitt (7) auf wenigstens einem Teil der Länge (L) seiner Wand einen oder mehrere Längsschlitze (13a, 13b) hat.

8. Befestigungseinheit (100) nach einem der Ansprüche 3 bis 7, **dadurch gekennzeichnet, dass** die Rastorgane irreversibel sind und vorzugsweise umfassen:
- in der inneren Ringnut (5c) oder auf der flachen Ringscheibe eine erste Anschlagfläche (14a), die im wesentlichen rechtwinklig zur Längsrichtung (III-III) verläuft,
- an der radialen Aufspreizung (8a) eine zweite Anschlagfläche (14b), die im wesentlichen rechtwinklig zur Längsrichtung (III-III) verläuft und so ausgerichtet ist, dass sie sich an der ersten Anschlagfäche (14a) abstützen kann.

9. Befestigungseinheit (100) nach einem der Ansprüche 3 bis 7, **dadurch gekennzeichnet, dass** die Rastorgane reversibel sind.

10. Befestigungseinheit (100) nach einem der Ansprüche 1 bis 9, **dadurch gekennzeichnet, dass**:
- das erste Element (5) einen verformbaren Teil (26) hat, der so ausgebildet ist, dass er durch an der Schraube (2) ausgebildete Verformungsmittel (27) verformbar ist,
- der verformbare Teil (26) nach der Verformung einer Trennung der Schraube (2) von dem ersten Element (5) entgegenwirkt.

11. Befestigungseinheit (100) nach Anspruch 10, **dadurch gekennzeichnet, dass**:
- die Schraube (2) einen distalen Gewindeabschnitt (20) hat, der in Richtung des Schraubenkopfes (2b) durch einen proximalen, glatten Abschnitt (21) verlängert ist, dessen Innendurchmesser (D2) kleiner als der Außendurchmesser (D1) des distalen Gewindeabschnittes (20) ist, wobei der glatte proximale Abschnitt (21) mit dem Schraubenkopf (2b) verbunden ist durch einen Verbindungsabschnitt (22), der die Verformungsmittel (27) bildet,
- das erste Element (5) eine proximale Bohrung (5d) mit Innengewinde (5e) aufweist, das zur Aufnahme der Schraube (2) ausgebildet ist und den verformbaren Teil (26) bildet,
- der Verbindungsabschnitt (22) einen Außendurchmesser (D3) und eine Länge (L1) hat, so dass er in die proximale Bohrung (5d) des ersten Elementes (5) eingreifen kann und dabei das Innengewinde (5e) verformt.

12. Befestigungseinheit (100) nach Anspruch 11, **dadurch gekennzeichnet, dass** sich der Verbindungsabschnitt (22) über eine Länge (L1) erstreckt, so dass er bei Eingriff in die proximale Bohrung (5d) des ersten Elementes (5) nur einen Teil des Innengewindes (5e) verformt.

13. Befestigungseinheit (100) nach Anspruch 11, **dadurch gekennzeichnet, dass**:
- die Schraube (2) einen distalen Gewindeabschnitt (20) aufweist, der in Richtung auf den Schraubenkopf (2b) verlängert ist durch einen proximalen glatten Abschnitt (21) mit einem Durchmesser (D2), der kleiner als der Außendurchmesser (D1) des distalen Gewindeabschnittes (20) ist,
- das erste Element (5) eine proximale Bohrung (5d) hat, die zur Aufnahme der Schraube (2) dient und in einem proximalen Kranz (28) eingearbeitet ist, der über das erste Element (5) vorsteht und den verformbaren Teil (26) bildet,
- der Schraubenkopf (2b), der die Verformungsmittel (27) bildet, so ausgebildet ist, dass er den proximalen Kranz (28) so verformt, dass die proximale Bohrung (5d) nach der Verformung einen Durchmesser (D5) hat, der kleiner als der Durchmesser (D1) des distalen Gewindeabschnittes (20) ist.

## Claims

1. Fastening assembly (100) comprising a retaining device (1) for retaining a screw (2) in an elongate through-hole (3) made in a first element such as a wall (4), wherein:
- the retaining device (1) comprises a first component (5) and a second component (6), through which a through-bore passes in a longitudinal direction (III-III) for receiving the shank (2a) of the screw (2), and which are able to be joined together respectively coming close to the wall (4), on either side of the wall (4), with first and second bearing means at respective first (5a) and second (6a) bearing faces,
- the first component (5) and/or the second component (6) has a longitudinal portion (7) with an internal bore (7a) that is provided with securing means (8) that are able to cooperate with the other component (5, 6) in order to keep the first (5) and second (6) components joined together,
- the longitudinal portion (7) has two diametrically opposite outer flats (9a, 9b) that allow the longitudinal portion (7) to pass into the elongate hole (3), **characterized in that** it has a screw (2) with dimensions such that when the screw (2) is fitted with its shank (2a) in the retaining device (1) formed by its first (5) and second (6) joined-together components, its shank (2a) prevents the detachment of the securing means (8).

2. Fastening assembly (100) according to claim 1, **characterized in that** the outer flats (9a, 9b) place the inner space (7b) of the internal bore (7a) into communication with the outside.

3. Fastening assembly (100) according to either of claims 1 and 2, **characterized in that** the securing means (8) are snap-fastening means.

4. Fastening assembly (100) according to claim 3, **characterized in that** the snap-fastening means are oriented outward so as to be engaged by radial outward deformation and so as to be detached by radial inward contraction.

5. Fastening assembly (100) according to either of claims 3 and 4, **characterized in that**:
- the second component (6) is a bushing which has the longitudinal portion (7),
- the first component (5) is a bushing which comprises a distal bore (5b) having a cross section suitable for receiving the longitudinal portion (7) of the second component (6),
- the snap-fastening means comprise a radial widened portion (8a) of the free end (7c) of the longitudinal portion (7), designed to be received and retained in an inner annular groove (5c) provided in the distal bore (5b) of the first component (5).

6. Fastening assembly (100) according to either of claims 3 and 4, **characterized in that**:
- the first component (5) is a bushing which has the longitudinal portion (7),
- the second component (6) is a flat washer with a central bore (11),
- the snap-fastening means comprise a radial widened portion (8a) of the free end (7c) of the longitudinal portion (7), designed to be received by elastic radial deformation in the central bore (11) of the second component (6) and to be retained therein after passing through the central bore (11) of the second component (6).

7. Fastening assembly (100) according to claim 6, **characterized in that** the longitudinal portion (7) has one or more longitudinal slots (13a, 13b) in its wall along at least a part of its length (L).

8. Fastening assembly (100) according to any one of claims 3 to 7, **characterized in that** the snap-fastening means are irreversible, preferably having:
- in the inner annular groove (5c) or on the flat washer, a first stop facet (14a) that is substantially perpendicular to the longitudinal direction (III-III),
- on the radial widened portion (8a), a second stop facet (14b) that is substantially perpendicular to the longitudinal direction (III-III) and is oriented so as to bear against the first stop facet (14a).

9. Fastening assembly (100) according to any one of claims 3 to 7, **characterized in that** the snap-fastening means are reversible.

10. Fastening assembly (100) according to any one of claims 1 to 9, **characterized in that**:
- the first component (5) has a deformable part (26) that is configured to be able to be deformed by deformation means (27) provided on the screw (2),
- after deformation, the deformable part (26) prevents the separation of the screw (2) and the first component (5).

11. Fastening assembly (100) according to claim 10, **characterized in that**:
- the screw (2) has a threaded distal portion (20) that is extended, in the direction of the screw head (2b), by a smooth proximal portion (21) with a diameter (D2) smaller than the outside diameter (D1) of the threaded distal portion (20), the smooth proximal portion (21) itself being connected to the screw head (2b) by a connecting portion (22) that forms the deformation means (27),
- the first component (5) has a proximal bore (5d) with an inside thread (5e) that is intended to receive the screw (2) by screwing and forms the deformable part (26),
- the connecting portion (22) has an outside diameter (D3) and a length (L1) that allow it to be fitted in the proximal bore (5d) of the first component (5) by deforming the inside thread (5e).

12. Fastening assembly (100) according to claim 11, **characterized in that** the connecting portion (22) extends along a length (L1) such that, when it is fitted in the proximal bore (5d) of the first component (5), it deforms only a part of the inside thread (5e).

13. Fastening assembly (100) according to claim 11, **characterized in that**:
- the screw (2) has a threaded distal portion (20) that is extended, in the direction of the screw head (2b), by a smooth proximal portion (21) having a diameter (D2) smaller than the outside diameter (D1) of the threaded distal portion (20),
- the first component (5) has a proximal bore (5d) that is intended to receive the screw (2), is made in a proximal crown (28) protruding from the first component (5) and forms the deformable part (26),
- the screw head (2b), which forms the deformation means (27), is designed to deform the proximal crown (28) such that, after deformation, the proximal bore (5d) has a diameter (D5) smaller than the diameter (D1) of the threaded distal portion (20).
